# EUROPEAN PATENT APPLICATION

(11) **EP 0 969 652 A2**
(43) Date of publication of application: **05.01.2000**
(21) Application number: 99112351.4
(22) Date of filing: 28.06.1999
(51) Int. Cl.: H04N 1/00

(54) **Image reading apparatus, information processing method, and storage medium**

(30) Priority: 29.06.1998 JP 18241298
(71) Applicant: CANON KABUSHIKI KAISHA, Tokyo (JP)
(72) Inventor: Wada, Yoshihiro, Ohta-ku, Tokyo (JP)
(74) Representative: Pellmann, Hans-Bernd, Dipl.-Ing.

(57) **Abstract**

This invention has as its object to provide an image reading apparatus which can easily and accurately read additional information written on a film leading portion, an information processing method, and a storage medium. For example, in an APS film, since the distances from the leading edge of the film to a magnetic recording layer and barcode recording portion are not constant, it is difficult to accurately read data on these recording layer and recording portion with reference to the leading edge of the film. In this invention, since the read is done with reference to the position of the perforation of the first frame, information can be easily and accurately read.

## Description

### BACKGROUND OF THE INVENTION

The present invention relates to an image reading apparatus which feeds a photographic film to an image input unit, converts optical image information formed on the film into an electrical image signal by an image reading unit, and outputs the image signal to a host computer or the like, an information processing method, and a storage medium and, more particularly, to a technique for reading and/or writing information on the film surface.

Conventionally, upon reading an image in an image reading apparatus that reads an exposed photographic film, indices for all the frames on the film are displayed on the monitor screen, and a frame to be scanned is selected. The operator sets the total number of frames of the film on a host computer, and instructs an automatic scan. In response to this instruction, a film scanner continuously feeds the film to an image reading unit including line sensor, sequentially reads all the frames at high speed and low resolution, transfers thumbnail images of all the frames to the host computer, and displays them on the monitor as indices.

In an APS (ADVANCED PHOTO SYSTEM; also called a "new photo system") film with a new film format that has been proposed recently, photographing information such as a photographing date, title, and the like are magnetically or optically recorded on the film.

Hence, such information magnetically or optically recorded on the film is also read by a magnetic data detection means or optical reading means at the same time upon continuous feed, and is converted into text information. The converted text information is transferred to the host computer, and is displayed on the monitor together with each thumbnail image.

The operator designates the frame number of a frame an image of which is to be read, and its resolution on the index display. In response to this designation, the film scanner locates the designated frame at the reading position and reads its image, and transfers the image data to the host computer to display it.

Conventionally, a read (or load) or write of information magnetically recorded on a film and a read and write of information optically recorded on the film are done with reference to the positions of perforations formed on the film to indicate frame positions. However, a film leader having no frame does not have any perforation. For this reason, in order to read magnetic or optical information recorded on the leader, the distance from the leading edge to a recording layer is measured. However, since this distance varies depending on films, read errors occur. Hence, it is difficult to read magnetic or optical information recorded on the leader, since, e.g., a slow read must be done until effective magnetic or optical information is detected.

Upon scanning/writing magnetically or optically recorded information, the scan precision varies depending on whether the film is being wound or rewound.

### SUMMARY OF THE INVENTION

The present invention has been made in consideration of such situation, and has as its object to provide an image reading apparatus which can easily and accurately read information magnetically and/or optically written on the film leader, its information processing method, and a storage medium that stores a program for implementing this method.

In order to achieve the above object, according to the present invention, the image reading apparatus is constructed, as described in (1) to (5) below, the information processing method and storage medium are constructed, as described in (6) and (7) below, respectively.
(1) An image reading apparatus comprising:
   reading means for reading an image on a film by a main scan with a linear image sensor and by a sub-scan with a relative movement between the image on the film and linear image sensor;
   additional means for reading and/or writing additional information on the film; and
   control means for controlling to read and/or write the additional information on a leading portion of the film during a course of rewinding the film.
(2) In the image reading apparatus described in (1), the control means controls to read and/or write information recorded on the film in units of frames in a winding direction of the film.
(3) In the image reading apparatus described in (1), the control means uses a perforation of the film as a reference of the read and/or write of the information.
(4) In the image reading apparatus described in (1), the control means controls to read and/or write all pieces of information on the film in the rewinding direction of the film.
(5) In the image reading apparatus described in (3), the control means winds the film until a predetermined frame passes by, then rewinds the film, and detects the perforation of the frame as the start reference for the read and/or write.
(6) An information processing method in a film image reading apparatus, comprises the steps of: rewinding a film; and reading and/or writing information on a film during a course of said rewinding step.
(7) A storage medium stores a program for implementing an information processing method described in (6).

Other objects and advantages besides those discussed above shall be apparent to those skilled in the art from the description of a preferred embodiment of the invention which follows. In the description, reference is made to accompanying drawings, which form a part thereof, and which illustrate an example of the invention. Such example, however, is not exhaustive of the various embodiments of the invention, and therefore, reference is made to the claims which follow the description for determining the scope of the invention.

### BRIEF DESCRIPTION OF THE DRAWINGS

Fig. 1 is a block diagram showing the arrangement of an embodiment;
Fig. 2 is an explanatory view of a film cartridge;
Fig. 3 is a flow chart showing magnetic information reading operation in units of frames;
Fig. 4 is a flow chart showing magnetic information reading operation of a leader;
Figs. 5A and 5B are flow charts showing the communication pattern between a film scanner and host computer;
Fig. 6 is a flow chart showing command execution operation; and
Fig. 7 is a flow chart showing main scan operation.

### DETAILED DESCRIPTION OF THE PREFERRED EMBODIMENT

The preferred embodiment of the present invention will be described in detail hereinafter taking a "film scanner" as an example.

In this embodiment, a roll of film housed in a cartridge is read. However, the present invention is not limited to this, and can be applied to other films that record frame data. In this embodiment, information is magnetically and optically recorded on the film surface. However, the present invention is not limited to this, and information may be magnetically or optically recorded. Furthermore, the present invention is not limited to such specific hardware arrangement such as a film scanner, and may be applied to an information processing method and a storage medium that stores a program for implementing the method.

### [Embodiment]

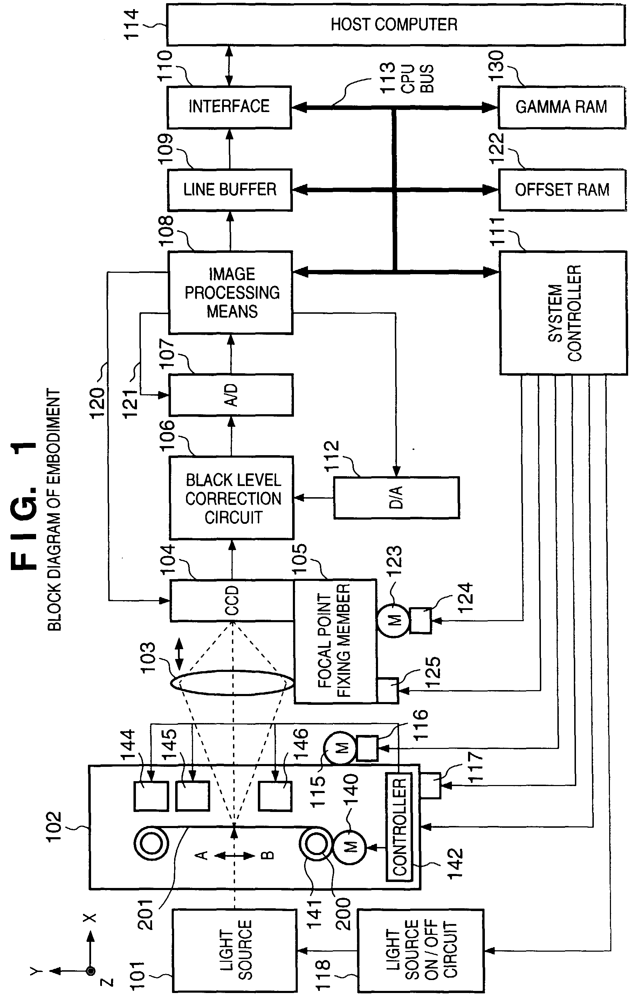

Fig. 1 is a block diagram showing the arrangement of the "film scanner" as the embodiment.

Referring to Fig. 1, reference numeral 101 denotes a cold cathode ray tube serving as a light source. Reference numeral 102 denotes a film adapter for holding a cartridge 141 that houses film. The film adapter 102 is movable in the Y-direction on the plane of paper of Fig. 1. Reference numeral 115 denotes a sub-scanning motor for moving the film adapter 102 in the sub-scanning direction. The motor 115 comprises a stepping motor in this embodiment. Reference numeral 116 denotes a sub-scanning motor driver for driving the sub-scanning motor 115 in accordance with a command from a system controller 111. Reference numeral 117 denotes a sub-scanning position detection means for detecting a sub-scanning reference position. The detection means 117 detects a projection (not shown) of the film adapter 102 using a photointerrupter. Reference numeral 103 denotes an imaging lens system; and 104, a CCD linear image sensor (to be simply referred to as a linear image sensor hereinafter) . The linear image sensor 104 is placed so that its longitudinal direction agrees with the Z-direction of the plane of paper of Fig. 1. With this positional relationship, the main scanning direction Z as the longitudinal direction of the linear image sensor 104 makes a right angle with the sub-scanning direction Y as the moving direction of the film adapter 102.

Image reading is done by moving the entire film adapter 102 in the sub-scanning direction or Y direction by the sub-scanning motor 115 after a designated frame search is made in the cartridge 141 held by the film adapter 102.

Reference numeral 105 denotes a focal point fixing member, which holds the linear image sensor 104 at a position in the vicinity of the image plane of the imaging lens system 103, and is integrally movable in the optical axis direction, i.e., the X-direction on the plane of paper of Fig. 1. Reference numeral 106 denotes a black level correction circuit for adjusting the black level of an analog image signal output from the linear image sensor 104. Reference numeral 107 denotes an A/D converter for converting the analog signal that has been processed by the black level correction circuit 106 into a digital signal. Reference numeral 108 denotes an image processing means for executing processes such as an image process, a process for generating CCD driving pulses, and the like. The image processing means 108 comprises a gate array, which can execute various processes at high speed. Reference numeral 109 denotes a line buffer for temporarily storing image data. The line buffer 109 is implemented by a versatile random access memory. Reference numeral 110 denotes an interface which is used for communicating with a computer 114 such as a host computer. Reference numeral 111 denotes a system controller which stores the sequence of the overall film scanner, and controls various operations in accordance with commands from the host computer 114. Reference numeral 112 denotes a D/A converter for outputting a reference voltage for the black level correction circuit 106. Reference numeral 113 denotes a CPU bus that connects the system controller 111, image processing means 108, line buffer 109, and interface 110. The CPU bus 113 includes address and data buses. Again, reference numeral 110 denotes an interface circuit which is implemented by a SCSI controller in this embodiment. Reference numeral 118 denotes a light source ON/OFF circuit, i.e., a so-called inverter circuit, for lighting the cold cathode ray tube 101. Reference numeral 120 denotes a driving signal for driving the linear image sensor 104; and 121, a sample & hold control signal for sampling and holding an input signal. Reference numeral 122 denotes an offset RAM serving as a working area upon executing the image process. The offset RAM 122 temporarily stores various data upon executing shading correction, color data synthesis, and the like. Reference numeral 123 denotes a focus motor driver for moving the focal point fixing member 105 in the optical axis direction; 124, a focus motor driver for supplying a driving signal to the focus motor 123; and 125, a focal point position detection means for detecting the initial position of the focal point fixing means 105. Reference numeral 130 denotes a gamma RAM which stores gamma curve data and is used in gamma correction.

The film adapter 102 shown in Fig. 1 will be explained below. Reference numeral 140 denotes a motor for winding or rewinding the film housed in the film cartridge. The motor 140 engages with a spool 200 of the film cartridge 141 and rotates the housed film in the forward or reverse direction. The motor 140 is used for locating a designated frame or driving the film at high speed upon reading thumbnail images of all frames or reading magnetic or optical information. Reference numeral 142 denotes a controller which receives commands from the system controller 111 and sends status thereto via a communication line 143 to control the motor 140 in accordance with the command contents. Reference numeral 144 denotes a photosensor for optically detecting perforations of the film. Reference numeral 145 denotes a photosensor for detecting optical information such as a barcode written on the edge portion of the film. Reference numeral 146 denotes a magnetic information detecting/recording means, i.e., a reproduction/recording magnetic head, for detecting magnetic information written at the edge portion of the film, and recording magnetic information on the film surface. Reference numeral 143 denotes a communication line used for exchanging information between the system controller 111 and the controller 142 in the film adapter 102 via serial communications in this embodiment.

Referring to Fig. 1, A indicates a winding direction, i.e., a direction to extract film 201 from the cartridge 141. On the other hand, B indicates a rewinding direction, i.e., a direction to house the film 201 in the cartridge 141. The film 201 is fed from the cartridge 141 upon rotation of the spool 200. The film is held by a film takeup portion for taking up the fed film, and capstan, pinch rollers, and the like (not shown) placed along a film convey path between the film cartridge and takeup portion, and is fed at a constant speed. These operations are processed by the controller 142 in the film adapter.

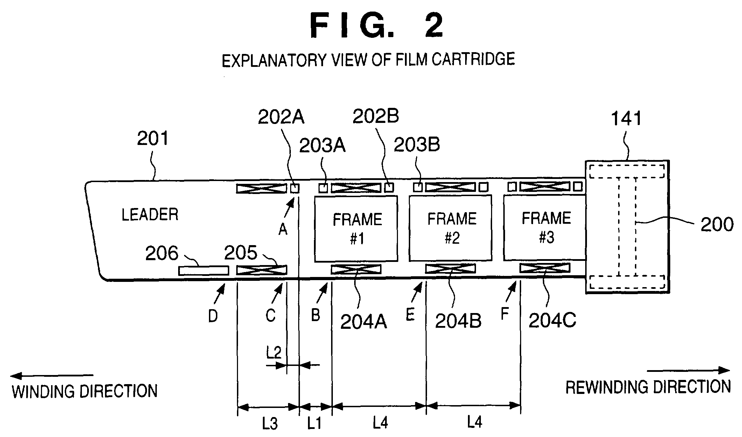

Fig. 2 is an explanatory view of the film cartridge. The film cartridge 141 has the spool 200 around which a roll of photographic film 201 is wound. The film 201 has perforations indicating the frame positions. The perforations are formed in units of frames, i.e., perforations 202A and 203A are formed on frame 1, perforations 202B and 203B on frame 2, and so forth. The position of each frame is detected by optically detecting these perforations by the photosensor 144 shown in Fig. 1.

Thumbnail images are simultaneously read by winding the film in the cartridge held by the film adapter 102 using the motor 140 at high speed.

A magnetic recording layer is formed on the entire surface or edge portion of the film, and magnetically records photographing data and the like in units of frames. In this embodiment, magnetic recording layers are formed in units of frames: a magnetic recording layer 204A on frame 1, a magnetic recording layer 204B on frame 2, and so forth. Furthermore, a similar magnetic recording layer 205 is formed on the film leader to record information of the entire film. Also, the film leader has a barcode recording portion 206 that optically records information of the entire film.

The developed photographic film can be housed in the cartridge 141 in a rewound state.

Reading of magnetic information on the film set in the film adapter 102 by the film scanner of this embodiment will be explained below.

The film adapter 102 comprises the controller 142, which drives the motor 140 in the film adapter 102 and controls winding/rewinding of the film 201 housed in the cartridge 141 while communicating with the system controller 111 via the serial communication line 143.

Upon reading magnetic information in units of frames, magnetic data recorded on the magnetic recording layers 204A, 204B, 204C,... are read by feeding the film in ascending order of frame, i.e., frame 1 (Frame #1), frame 2 (Frame #2), frame 3 (Frame #3),..., and are sent to the system controller 111 via the serial communication line 143. The system controller 111 processes these magnetic data, and transfers them to the host computer 114.

After film feed has begun by rotating the motor 140, the controller 142 of the film adapter 102 detects edge A of the perforation 202A of the first frame using the photosensor 144. Upon detecting edge A of perforation 202A of the first frame by the photosensor 144, the controller 144 feeds the film 201 by a given distance L1, and when start point B of the magnetic recording layer 204A has reached, the controller 142 begins to read magnetic data and sends it to the system controller 111. The controller 144 reads magnetic data on the magnetic recording layer 204B of the second frame from point E advanced by a distance L4 from point B, and magnetic data on the magnetic recording layer 204C of the third frame from point F advanced by a distance L4 from this point E. Similar operation repeats itself until the final frame is reached.

Note that the read start point of the magnetic recording layer of each frame may be detected with reference to a perforation of the frame. More specifically, the start point of the magnetic recording layer of the second frame is detected using the perforation 203B, and that of the third frame is detected using the perforation 203C.

Upon reading data on the magnetic recording layer 205 of the leader, there are no perforations serving as reference positions between the leading end of the leader to the magnetic recording layer 205, and the distance between the leading end of the leader and the magnetic recording layer 205 varies depending on films. For this reason, the count value of the film feed amount after beginning of film feeding cannot be used as a reference value.

In view of this, the controller 142 of the film adapter 102 rotates the motor 140 to temporarily wind up the film until the perforation 202A of the first frame passes by. For example, upon detecting edge A of the perforation 202A of the first frame, the controller 142 further feeds the film 201 by a given distance L1. The controller 142 then rotates the motor 140 in the reverse direction to begin to rewind the film. After rewinding has begun, the controller 142 detects edge A of the perforation 202A of the first frame using the photosensor 144. Upon detecting edge A of the perforation 202A of the first frame, the controller 142 further feeds the film 201 by a given distance L2. When start point C of the magnetic recording layer 205 has been reached, the controller 142 begins to read magnetic data, and sends it to the system controller 111. Since the magnetic data read at that time has an order of arrangement opposite to that of magnetic data in units of frames, the system controller 111 must rearrange the data in the reverse order upon transferring the data to the host computer 114.

The method of reading magnetic data has been exemplified, and the same applies to a data write.

Also, the contents of the barcode recording portion 206 on the film leader can be read by the same method.

The controller 142 of the film adapter 102 rotates the motor 140 to temporarily wind up the film until the perforation 202A of the first frame passes by. Upon detecting edge A of the perforation 202A of the first frame, the controller 142 further feeds the film 201 by the given distance L1. The controller 142 then begins to rewind the film, and detects edge A of the perforation 202A of the first frame using the photosensor 144. Upon detecting edge A of the perforation 202A of the first frame, the controller 142 further feeds the film 201 by the given distance L3. When start point D of the barcode recording portion 206 has been reached, the controller 142 begins to read optical information using the photosensor 145, and sends it to the system controller 111. The same applies to a data write on the barcode recording portion 206.

As described above, since a data write and read are done on the respective magnetic recording layers and barcode recording portion using perforations as reference positions as well as those on the film leader, written information can be easily and accurately read all the time.

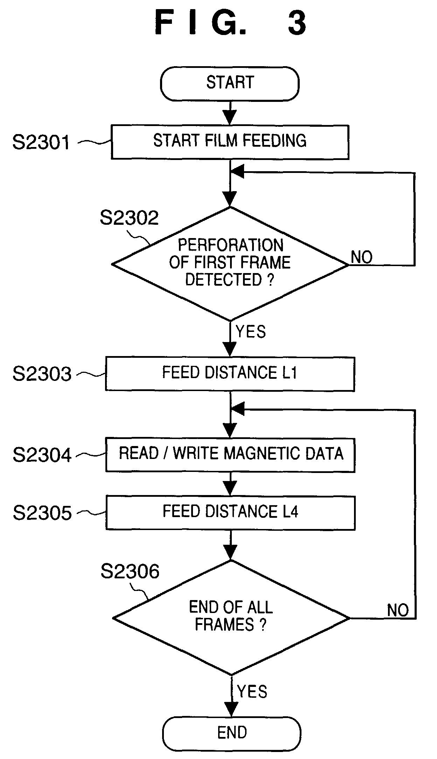

Magnetic information read and write processes in units of frames by the controller 142 in the film adapter 102 will be described below with reference to the flow chart shown in Fig. 3.

Step 2301: The controller 142 drives the motor 140 to feed the film 201 from the film cartridge 140 to start winding.

Step 2302: The controller 142 waits until the photosensor 144 detects the perforation 202A of the first frame.

Step 2303: The controller 142 further winds up the film 201 by the distance L1.

Step 2304: The controller 142 reads magnetic data, and sends it to the system controller 111 via the serial communication line 143.

Step 2305: The controller 142 further winds up the film 201 by the distance L4.

Step 2306: If all the frames of the film have been wound up, the flow ends; otherwise, the flow returns to step 2304 to read magnetic data.

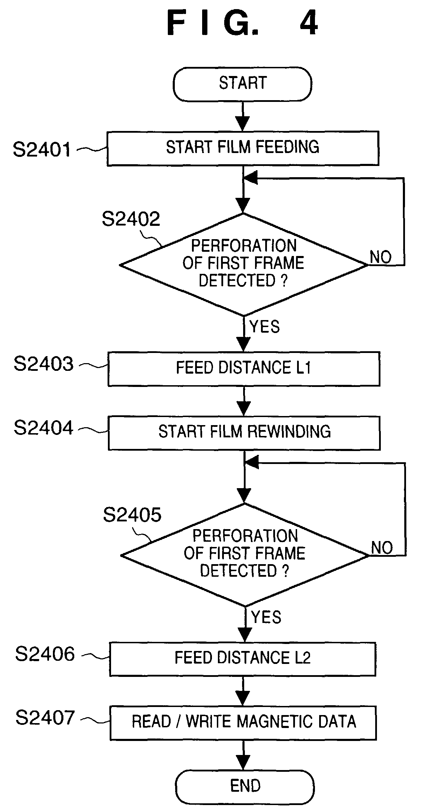

A process for reading magnetic information on the leader by the controller 142 in the film adapter will be described below with reference to the flow chart in Fig. 4.

Step 2401: The controller 142 drives the motor 140 to feed the film 201 from the film cartridge 140 to start winding.

Step 2402: The controller 142 waits until the photosensor 144 detects the perforation 202A of the first frame.

Step 2403: The controller 142 further winds up the film 201 by the distance L1.

Step 2404: The controller 142 rotates the motor 140 in the reverse direction to start rewinding of the film 201.

Step 2405: The controller 142 waits until the photosensor 144 detects the perforation 202A of the first frame.

Step 2406: The controller 142 further rewinds the film 201 by the distance L2.

Step 2407: The controller 142 reads magnetic data, and sends it to the system controller via the serial communication line 143.

In the above description, a read/write of magnetic information of each frame is done in the winding direction since high film feed precision is assured. However, the present invention is not limited to such specific direction. For example, the film may be wound up to its final frame, and a read/write of magnetic information of each frame may be done in the rewinding direction with reference to the perforation of the final frame.

In this case, magnetic information and optical information on the film leader can be simultaneously read.

The basic operation of the film scanner of this embodiment and host computer 114 will be explained below using flow charts.

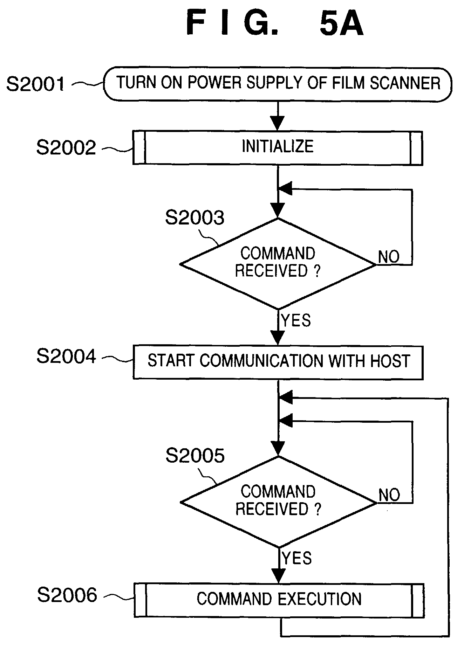

Fig. 5A shows the basic operation sequence of the film scanner.

Step 2001: The power supply of the film scanner is turned on.

Step 2002: The film scanner is initialized.

Step 2003: A command wait routine is executed. That is, the film scanner waits for a communication from the host computer 114. Upon receiving a command, the flow advances to step 2004.

Step 2004: The film scanner begins to communicate with the host computer 114.

Step 2005: The film scanner waits for reception of a command. Upon receiving a command, the flow advances to step 2006.

Step 2006: The film scanner receives the command and executes corresponding operation. The film scanner sends information corresponding to the execution result of the operation to the host computer 114, and the flow returns to step 2005.

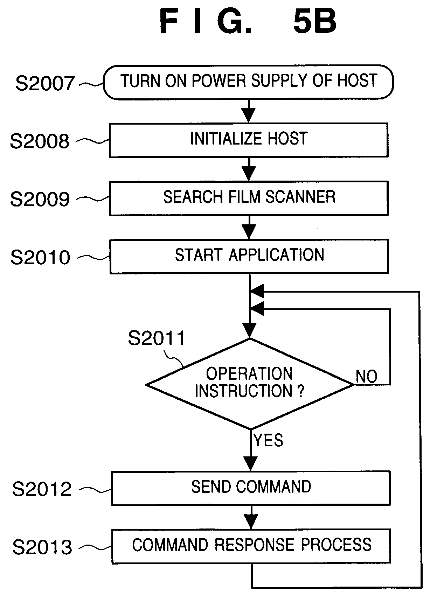

Fig. 5B shows the basic operation sequence of the host computer 114.

Step 2007: The power supply of the host computer is turned on.

Step 2008: The host computer is initialized.

Step 2009: The host computer searches a film scanner on the communication bus.

Step 2010: The host computer starts application software including driver software.

Step 2011: The user operates the application software and inputs the job he or she wants the film scanner to do.

Step 2012: The application software generates an operation command as a communication command, starts the driver software, and outputs the command to the film scanner.

Step 2013: The application software receives the operation state from the film scanner via the driver software, and provides information to the user on the screen. Upon completion of a command response process, the flow returns to step 2011.

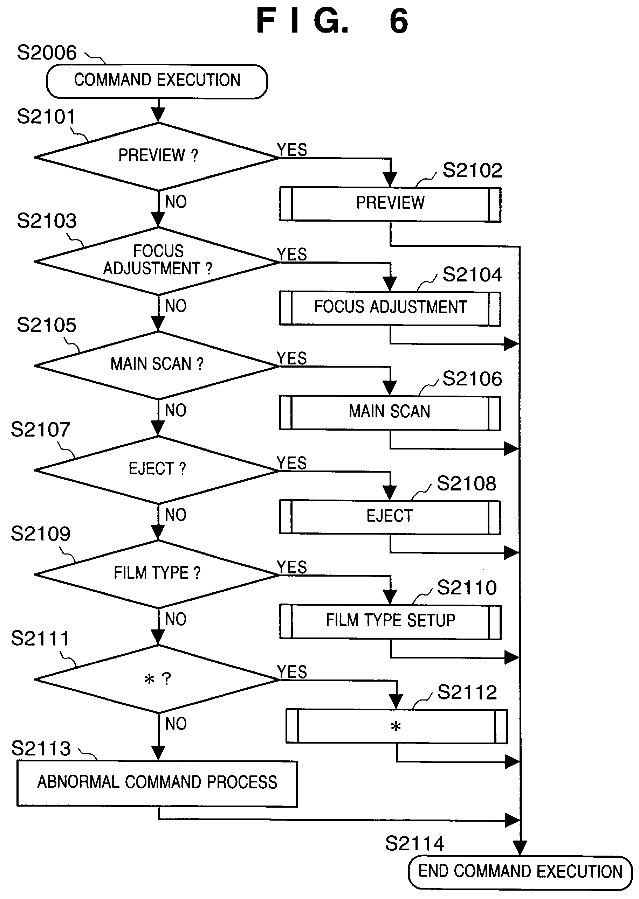

Fig. 6 is a flow chart showing command execution in step 2006 in the film scanner of this embodiment.

Step 2101: It is checked if the received command is a preview command. If the preview command is received, the flow advances to step 2102; otherwise, the flow advances to step 2103.

Step 2102: A sequence for executing the preview command is done.

Step 2103: It is checked if the received command is a focus adjustment command. If the focus adjustment command is received, the flow advances to step 2104; otherwise, the flow advances to step 2105.

Step 2104: A sequence for executing the focus adjustment command is done.

Step 2105: It is checked if the received command is a main scan command. If the main scan command is received, the flow advances to step 2106; otherwise, the flow advances to step 2107.

Step 2106: A sequence for executing the main scan command is done.

Step 2107: It is checked if the received command is an eject command. If the eject command is received, the flow advances to step 2108; otherwise, the flow advances to step 2109.

Step 2108: A sequence for executing the eject command is done.

Step 2109: It is checked if the received command is a film type command. If the film type command is received, the flow advances to step 2110; otherwise, the flow advances to step 2111.

Step 2110: A sequence for executing the film type command is done.

Step 2111: It is checked if the received command is other than those described above. If such command is received, the flow advances to step 2112; otherwise, the flow advances to step 2113.

Step 2112: A sequence for executing other commands is done.

Step 2113: A process upon receiving an abnormal command is done.

Step 2114: The film scanner sends end of command execution to the host computer, and ends the command execution routine.

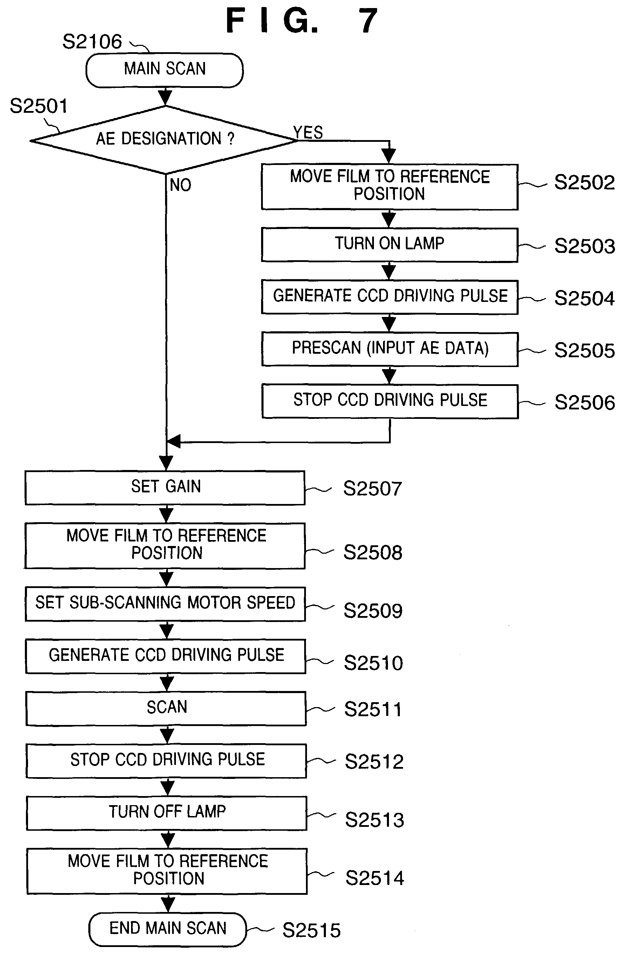

Fig. 7 is a flow chart showing the main scan in step 2106.

Step 2501: The main scan command is received, and it is checked if the received command includes an AE designation command. If the AE designation command is included, the flow advances to step 2502; otherwise, the flow advances to step 2507.

Step 2502: The system controller 111 controls the sub-scanning motor 115 to locate the initial position in the sub-scanning direction.

Step 2503: The system controller 111 sends a light source ON command to the light source ON/OFF circuit 118.

Step 2504: The system controller 111 sets driving pulses for measuring the light amount in the image processing means 108, and grants permission to generate a driving signal 120.

Step 2505: The system controller 111 executes a prescan to estimate the value of the film density on the basis of the measured light amount, and to calculate the gain value.

Step 2506: The system controller 111 stops the driving signal 120.

Step 2507: The system controller 111 sets the gain value.

Step 2508: The system controller 111 controls the sub-scanning motor 115 to locate the initial position in the sub-scanning direction.

Step 2509: The system controller 111 sets the speed of the sub-scanning motor 115 in correspondence with the resolution contained in the scan command.

Step 2510: The system controller 111 sets operation pulses in the main scanning direction in the image processing means 108 in correspondence with the resolution contained in the scan command, and controls the image processing means 108 to generate a driving signal 120.

Step 2511: The system controller 111 determines the scan amount in the sub-scanning direction, and the image processing range in the main scanning direction in correspondence with the scan range contained in the scan command, and executes a scan.

Step 2512: The system controller 111 stops the driving signal 120 generated in step 2510.

Step 2513: The system controller 111 sends a light source OFF command to the light source ON/OFF circuit 118.

Step 2514: The system controller 111 monitors the sub-scanning position detection means 117, and moves the film adapter 102 to the initial position using the sub-scanning motor 115.

Step 2515: The main scan command is ended.

As described above, according to this embodiment, a read and write of information magnetically recorded on the first frame and subsequent frames on the photographic film, and a read of information optically recorded thereon are done in the winding direction in which feeding is more stable, and a read and write of information recorded on the film leader are done with reference to the perforation of the first frame by rewinding the film. Hence, the information on the film leader can be easily and accurately read, and the read precision of information on the first frame and subsequent frames of the film can also be improved.

To restate, according to the present invention, information magnetically and/or optically written on the film leader can be easily and accurately read.

The present invention is not limited to the above embodiments and various changes and modifications can be made within the spirit and scope of the present invention. Therefore, to apprise the public of the scope of the present invention the following claims are made.

This invention has as its object to provide an image reading apparatus which can easily and accurately read additional information written on a film leading portion, an information processing method, and a storage medium. For example, in an APS film, since the distances from the leading edge of the film to a magnetic recording layer and barcode recording portion are not constant, it is difficult to accurately read data on these recording layer and recording portion with reference to the leading edge of the film. In this invention, since the read is done with reference to the position of the perforation of the first frame, information can be easily and accurately read.

## Claims

1. An image reading apparatus comprising:
reading means for reading an image on a film by a main scan with a linear image sensor and by a sub-scan with a relative movement between the image on the film and linear image sensor;
additional means for reading and/or writing additional information on the film; and
control means for controlling to read and/or write the additional information on a leading portion of the film during a course of rewinding the film.

2. The apparatus according to claim 1, wherein said control means controls to read and/or write information recorded on the film in units of frames in a winding direction of the film.

3. The apparatus according to claim 1, wherein said control means uses a perforation of the film as a reference of the read and/or write of the information.

4. The apparatus according to claim 1, wherein said control means controls to read and/or write all pieces of information on the film in the rewinding direction of the film.

5. The apparatus according to claim 3, wherein said control means winds the film until a predetermined frame passes by, then rewinds the film, and detects the perforation of the frame as the start reference for the read and/or write.

6. An information processing method in a film image reading apparatus, comprising the steps of:
rewinding a film; and
reading and/or writing information on a film during a course of said rewinding step.

7. A storage medium storing a program for implementing an information processing method of claim 6.
